# EUROPEAN PATENT APPLICATION

(11) **EP 2 330 310 A1**
(43) Date of publication of application: **08.06.2011**
(21) Application number: 10193411.5
(22) Date of filing: 02.12.2010
(51) Int. Cl.: F16D 27/00, F16H 48/30

(54) **Actuator for operating a differential lock**

(30) Priority: 04.12.2009 GB 0921263
(71) Applicant: Meritor Heavy Vehicle Systems Cameri SpA, 28062 Cameri (NO) (IT)
(72) Inventor: Gianone, Roberto, 28010, Barengo (NO) (IT); Cesari, Chiara, 28100, Novara (IT); Bassi, Marco, 20026, Novate Milanese (Mi) (IT)
(74) Representative: Jones, John Bryn

(57) **Abstract**

An actuator (10) for operating a differential lock, the actuator (10) including a chassis(13), a first motor (20) mounted on the chassis (13) and including a first motor pinion (22), a second motor (30) mounted on the chassis (13) and including a second motor pinion (32), a ring gear (40) rotatably mounted on the chassis (13) about a ring gear axis and having a ring gear thread defined about the ring gear axis,
an actuator element (50) having an actuator element thread in engagement with the ring gear thread and having a means for preventing rotation of the actuator element thread, the first motor pinion (22) and second motor pinion (32) being operable to drive the ring gear (40).

## Description

The present invention relates to actuators, in particular, actuators for operating a differential lock of a land vehicle, such as a truck or car. The present invention also relates to a method of operating a differential.

Differentials are known in rear axles of trucks. Their purpose is to allow the right and left hand truck wheels to turn at different speeds whilst still transmitting power to those wheels. Thus, when a truck negotiates a bend, the inside wheel will travel slower than the outside wheel and the differential allows for this difference in rotational speed whilst still maintaining power to both wheels. GB1130112 shows an example of a differential mechanism. A drive pinion rotates a crown wheel gear. The crown wheel gear is attached to the differential casing. The casing drives intermediate gears which in turn drive right and left hand differential gears which are rotatably coupled to right and left hand drive shafts. The differential can be considered to be a three shaft system. In this case all three shafts rotate about the same axis, the first shaft being defined by the differential casing, the second shaft being defined by the left hand drive shaft and the third shaft being defined by the right hand drive shaft. In this case a series of clutch plates are engageable so as to rotatably couple the differential casing to the left hand drive shaft, thereby locking the differential. The clutch is engaged by an electric motor operating a lever.

However, the motor is bulky and the operating mechanism is also bulky. For the differential lock to operate, pressure must be continuously applied to the clutch plates and hence the motor must be continually powered when the differential lock is engaged. This utilises a significant amount of energy and may cause the motor to overheat in adverse conditions. An object of the present invention is to provide an improved form of differential lock actuator. Another object of the present invention is to provide a differential lock actuator which uses less energy.

Thus, according to a first aspect of the present invention there is provided an actuator including a chassis, a first motor mounted on the chassis and including a first motor pinion, a second motor mounted on the chassis and including a second motor pinion, a ring gear rotatably mounted on the chassis about a ring gear axis and having a ring gear thread defined about the ring gear axis,
an actuator element having an actuator element thread in engagement with the ring gear thread and having a means for preventing rotation of the actuator element thread, the first motor pinion and second motor pinion being operable to drive the ring gear.

Advantageously utilising two motors to drive a single ring gear provides for a compact arrangement.

The actuator may be used to operate a differential lock. The actuator may be used to change between two speeds on a two speed axle.

In one embodiment the ring gear has a first axial side and a second axial side and the first motor and second motor are positioned on the first axial side and the actuator element is positioned on the first axial side.

Advantageously by arranging both motors and the actuator element on the same side of the ring gear provides for a compact arrangement.

In one embodiment the first motor is positioned substantially diametrically opposite to the second motor when considering the ring gear axis.

Advantageously, positioning the motors diametrically opposite to each other when considering the ring gear axis provides a compact arrangement.

In one embodiment the first motor pinion engages a first motor intermediate gear set, first motor intermediate gear set engaging the ring gear, and the second motor pinion engages a second motor intermediate gear set, the second motor intermediate gear set engaging the ring gear.

Advantageously, by arranging the intermediate gear sets opposite to each other ensures that forces on the ring gear are balanced and do not tend to tip the ring gear. In one embodiment the actuator element has a first part having said actuator element thread, a second part axially moveable relative to the first part and a resilient element to allow said axial movement of the first part relative to the second part.

Advantageously, such an arrangement allows for relative axial movement between the first part and the second part if, during an attempt to engage the differential lock, clashing of differential lock gear teeth occurs.

In one embodiment the first part is rotationally fast with the second part.

By providing the first part rotationally fast with a second part, when the second part is prevented from rotating (for example by engaging the chassis) then this in turn will prevent the first part from rotating.

In one embodiment a chassis defining a housing, said housing receiving at least a part of one or more of the first motor, the second motor, the first motor pinion, the second motor pinion, the first motor intermediate gear set, the second motor intermediate gear set, the ring gear, the first part, the second part, the resilient element, the resilient means and the means for detecting when the actuator is in the actuator position.

Advantageously, the housing can be used to protect the various components contained within it from the harsh exterior environment. In particular, both motors can be contained within a housing and hence electrical connectors to the motors can be protected by the housing.

In one embodiment the various gears of the system can be contained within the housing. Thus, the first motor pinion, the second motor pinion and the ring gear may be contained within the housing. In embodiments which include a first motor intermediate gear set and a second motor intermediate gear set, these gear sets can also be included within the housing.

In one embodiment the means for detecting when the actuator is in the actuated position can also be included within the housing. In particular where such means is a switch or the like the housing can act to protect the switch from the exterior environment. Furthermore, by providing the switch or the like in the housing allows the housing to protect both the switch and other components whilst still being able to detect whether or not the actuator is in the actuated position, and hence being able to detect whether or not an associated differential lock is in a locking position.

In one embodiment the first motor pinion is in permanent driving engagement with the ring gear and the second motor pinion is in permanent driving engagement with the ring gear.

In one embodiment the ring gear axis is a fixed axis, i.e. the ring gear only rotates about the ring gear axis and does not rotate about any other axis.

In one embodiment the first motor is operable to drive the ring gear by a fixed gear ratio.

In one embodiment the second motor is operable to drive the ring gear by a fixed gear ratio.

In one embodiment, when the first motor is operable to drive the ring gear by a fixed first gear ratio and when the second motor is operable to drive the ring gear by a fixed second gear ratio the fixed first gear ratio may be the same as the fixed second gear ratio. Under such circumstances the motors will operate at the same speed when driving the ring gear.

In one embodiment the two motors are identical motors.

In one embodiment there are only two motors.

As will be appreciated, whilst collectively the two motors will be powerful enough to create a force large enough to operate an associated differential lock, one motor alone (e.g. in the event of a failure of the second motor) may not be powerful enough to create a force large enough to operate the associated differential lock. Under such circumstances the actuator does not need any redundant motors, and as such the two motors can be less powerful, and hence smaller and more compact than if one of the motors was a redundant motor.

According to another aspect of the present invention there is provided a method of operating a differential including the steps of providing a differential having a first shaft having a first array of gear teeth, a second shaft and a third shaft, providing a differential lock gear secured axially movably but rotationally fast with the second shaft, the differential lock having a second array of gear teeth for selective engagement with the first array of gear teeth so as to prevent relative rotation of the first and second shafts,
providing a biased means to selectively bias the teeth out of engagement with each other,
powering an electrical actuator so as to engage the teeth,
then intermittently powering the electrical actuator so as to maintain engagement of the teeth,
then cutting power to the electric actuator so as to allow the teeth to disengage by action of the bias means.

Advantageously, by intermittently powering the electric actuator when the teeth are engaged reduces the power consumption required to keep the differential lock engaged.

In one embodiment the electric actuator is an actuator as defined in the above-mentioned first aspect of the present invention.

Where the electric actuator includes a first motor and a second motor the step of intermittently powering the electric actuator can be carried out by intermittently powering just one of the first motor and second motor. In this manner the power consumption required to keep the differential lock engaged is reduced.

According to another aspect of the present invention there is provided a method of operating a differential including the steps of providing a differential having a first shaft having a first array of gear teeth, a second shaft and a third shaft, providing a differential lock secured axially movably but rotationally fast with the second shaft, the differential lock having a second array of gear teeth for selective engagement with the first array of gear teeth so as to prevent relative rotation of the first and second shafts, the method including the steps of:
1) starting with the first array of gear teeth disengaged from the second array of gear teeth,
2) powering an electric actuator as to attempt to engage the first and second arrays of gear teeth,
3) determining if the first and second arrays of gear teeth have engaged with each other within a predetermined time,
4) if no such engagement occurs within said predetermined time cutting power to the electric actuator,
5) repeating steps 2 to 4 until engagement occurs or until engagement is no longer required.

Advantageously, such a method is able to detect when a differential lock fails to properly engage and then causes the electric actuator to return to a rest position and then retry, as many times as necessary.

In one embodiment the electric actuator is an actuator as defined in the above-mentioned first aspect of the present invention.

The invention will now be described, by way of example only, with reference to the accompanying drawings in which:-
Figure 1 is a cross-section view of an actuator according to the present invention,
Figure 2 is a cross-section view of some of the components of figure 1,

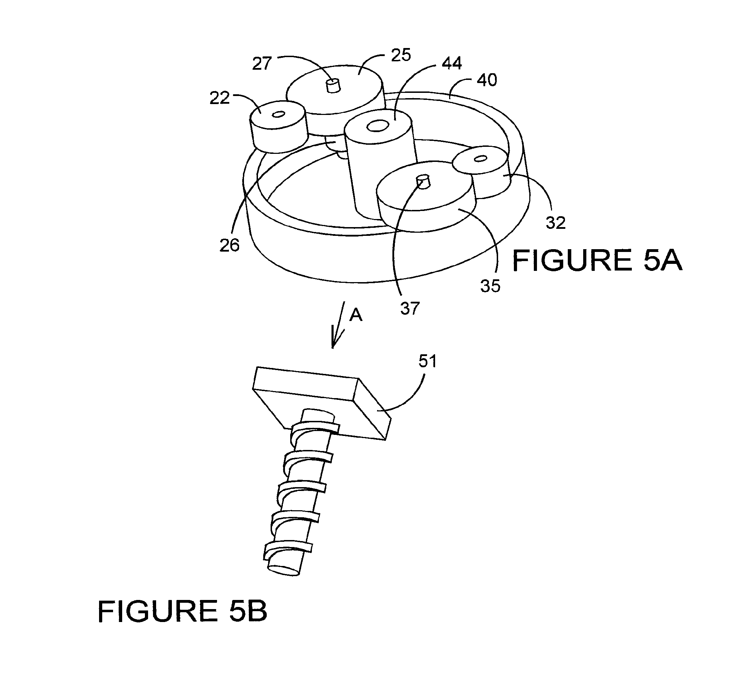

Figures 3, 4 and 5 are views of some of the components of figure 1,
Figure 6 shows a schematic view of the actuator of figure 1 mounted on an associated axle,
Figures 7 and 8 show graphs of motor voltage and actuator position during typical use.

With reference to the figures there is shown an actuator 10 having a housing 12.

The housing 12 is a two part housing having a first part 14 and a second part 15. Contained within the housing 12 is a first motor 20 (in this example an electric motor) and a second motor 30 (in this example an electric motor). The first motor 20 selectively drives a first motor pinion 22 and the second motor selectively drives a second motor pinion 32. A first motor intermediate gear set 24 includes a first larger gear 25 and a first smaller gear 26. A second motor intermediate gear set 34 includes a second larger gear 35 and a second smaller gear 36. A ring gear 40 includes an annulus 41 having an array of gear teeth 42 (shown schematically) facing radially inwardly. The annulus 41 is connected by a flange 43 to a boss 44. The boss 44 has a cylindrical outer surface 45 and a threaded central hole 46.

The actuator 10 also includes an actuator element 50. In this case actuator element 50 comprises three components namely a bolt 51, a spring 52 and an outer sheath 53.

The bolt 51 includes a male thread 60 for engaging with the female thread in the central hole 46. The bolt has a head 61 which is square when viewed in the direction of arrow A. The sheath 53 has a generally cylindrical outer surface 65 having a lug 66 at one end, the lug including a hole 67. The sheath also includes an axially orientated blind hole 68 which is square in cross-section. The square cross-section shape of the blind hole 68 mates with the square bolt head 51 to prevent the latter from rotating relative to the sheath in use. The square cross-section of the blind hole 68 is large enough to accommodate the cylindrical outer surface 45 of the boss 44.

Positioned within the blind hole is the spring 52. The spring 52 is positioned between the bolt head 61 and the end 69 of the blind hole 68.

At an end of the outer sheath remote from end 69 the outer sheath includes a flange 70 having a first arm 71 and a second arm 72.

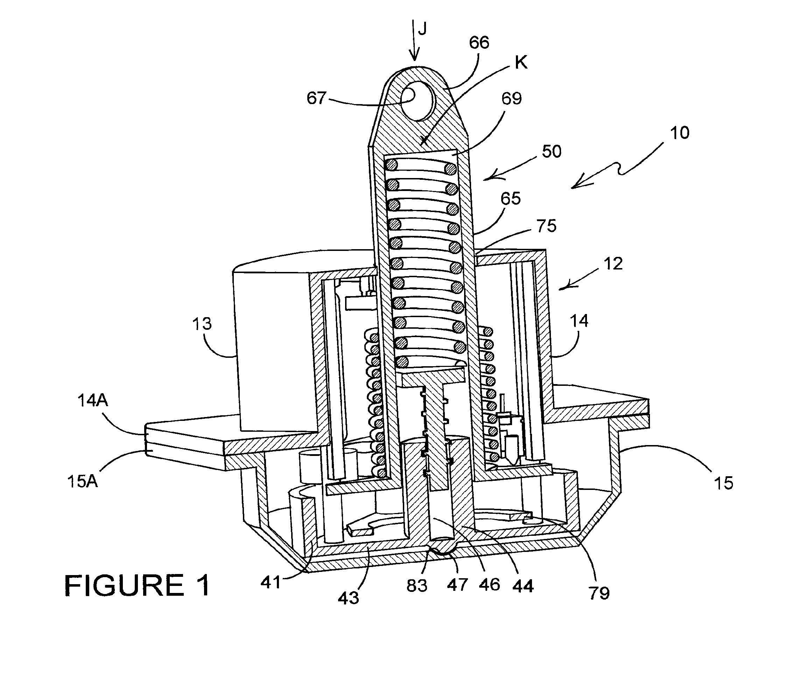

As is best seen in figure 1, the first part 14 of the housing is generally top hat shaped and includes a hole 75 through which the outer sheath 53 projects. The second part 15 of the housing is also generally top hat shaped. The first part 14 is secured to the second part 15 via flanges 14A and 15A.

The first part 14 includes axially projecting pins 76 and 77, which project into the recess formed by the second part 15. The pins 76 and 77 support a bearing plate 79.

A return spring 80 (only the lower part of which is shown) engages the flange 70 of the outer sheath at one end and engages the inner surface of the first part 14 of the housing at an opposite end.

An electric switch 81 is positioned above first arm 71.

The first motor 20 is rotatable about axis B. The second motor 30 is rotatable about axis C. The ring gear is rotatable about axis D. The first motor intermediate gear set 24 is rotatable about axis E. The second motor intermediate gear set is rotatable about axis F. The actuator element has a longitudinal axis defined by axis D. Axis B and C are parallel. Axis B and D are parallel. Axis C and D are parallel. Axis B and E are parallel. Axis C and F are parallel. Axis B is offset from axis D. Axis C is offset from axis D.

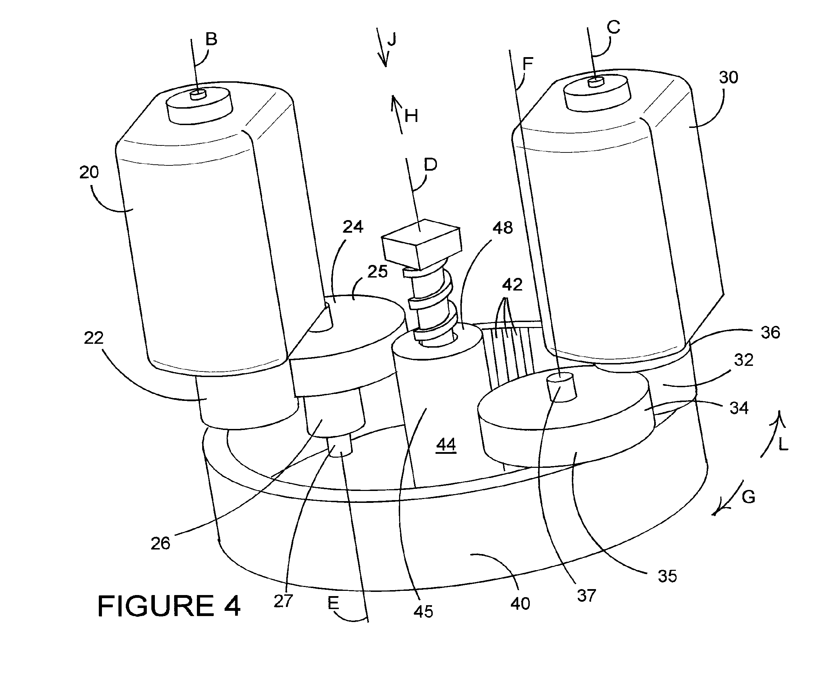

The housing 12 defines a chassis 13 of the actuator. The first motor 20 and second motor 30 are mounted on chassis 13. The chassis 13 includes the bearing plate 79 which is secured to pins 76 and 77. The bearing plate 79 includes holes for receiving bosses of the first motor intermediate gear set 24 and second motor intermediate gear set 34 (see in particular boss 27 on figure 4). The first part 14 of the housing also includes recesses for receiving bosses of the first motor intermediate gear set 24 and second motor intermediate gear set 34 (see in particular boss 37). As such, the first motor intermediate gear set 24 is rotatably mounted on the chassis as is the second motor intermediate gear set 34.

A projection 47 on a side of the flange 43 of the ring gear 40 opposite to the boss 44 engages a recess 83 in the second part 15 of the housing 12, thereby providing a bearing.

Operation of the actuator is as follows.

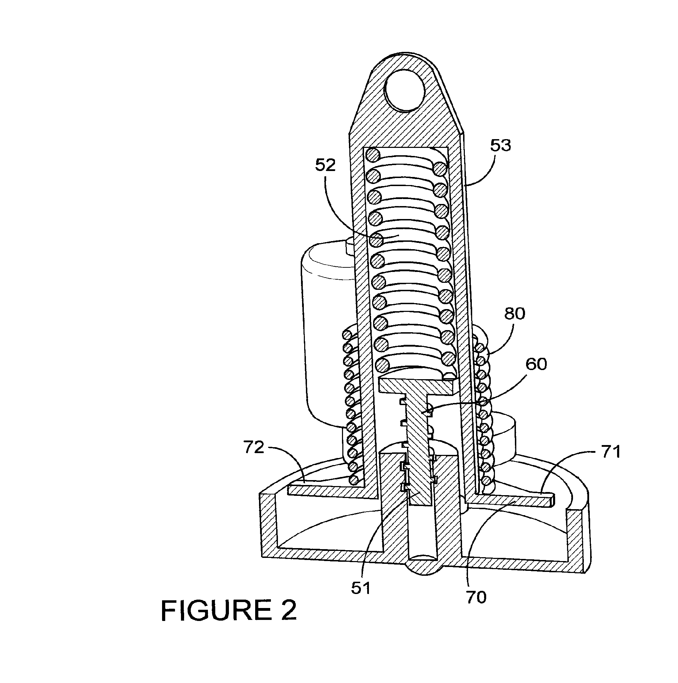

In summary, figures 1 to 4 show the actuator in an actuated position. The motors have driven the ring gear in the direction of arrow G causing the bolt 51 to move in the direction of arrow H to the actuated position against the bias of return spring 80.

Once power to the motors is cut for a significant amount of time the return spring 80 biases the actuator element 50 in the direction of arrow J to a rest position where the centre of the hole 67 has moved to point K.

In more detail, in the rest position, as mentioned above, the centre of hole 67 is positioned at point K, and hence the bolt head 61 is positioned near the end 48 of boss 44. The flange 70 is positioned near bearing plate 79. Flange 70 is positioned remote from switch 81. Pins 76 and 77 prevent rotation of the outer sheath 53 about axis D by engagement with adjacent first arm 71 and second arm 72. Because the outer sheath 53 is prevented from rotating about axis D, then, by virtue of the square cross-section of bolt head 61 engaging the square cross-section bore of the outer sheath, then the bolt is also prevented from rotating about axis D.

Starting from the rest position, both motors are simultaneously powered so as to rotate first motor pinion 22 and the second motor pinion 32. Motor pinions in turn rotate their associated intermediate gear sets. The intermediate gear sets in turn cause the ring gear 40 to rotate in the direction of arrow G. Due to the female thread in the central hole 46 of the boss 44 and the male thread 60 on the bolt 51, and by virtue of the fact that the bolt 51 is prevented from rotating about axis D, rotation of the ring gear in the direction of arrow G causes the bolt to move linearly in the direction of arrow H. Movement in the direction of arrow H of the bolt, and in particular the bolt head 61 causes the spring 52 to act on end 69 and thereby move the actuator element 50 from the rest position to the actuated position as shown in figures 1 to 4.

Once power to the motor is cut for a significant amount of time the return spring biases the actuator elements to the rest position, thereby causing the ring gear to rotate in the direction of arrow L (opposite to the direction arrow G) which in turn causes the motors to be back driven via the intermediate gear set and the motor pinions.

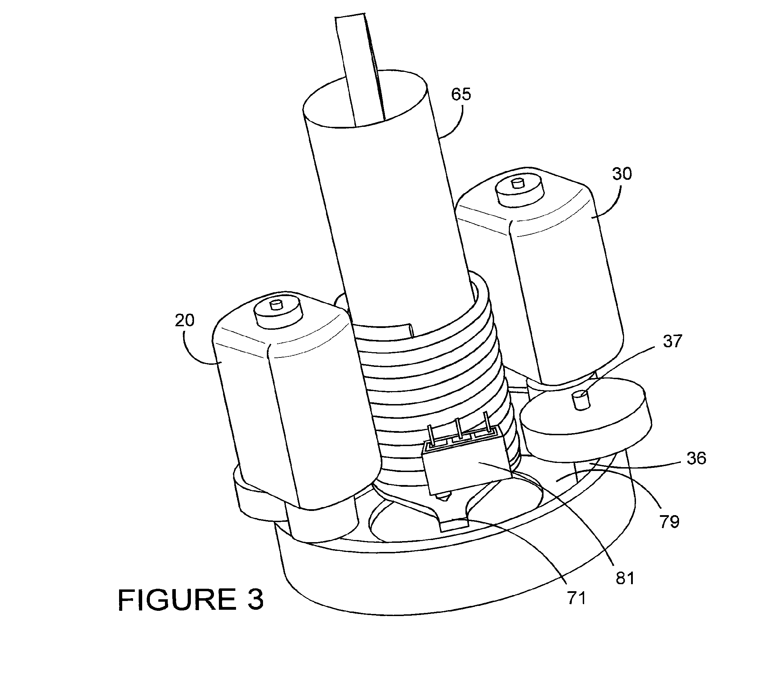

As shown in the figure 3, the switch 81 has detected that the actuator element, in particular the outer sheath 53 is in its actuated position. When the outer sheath is in its rest position, the flange 70 is remote from the switch.

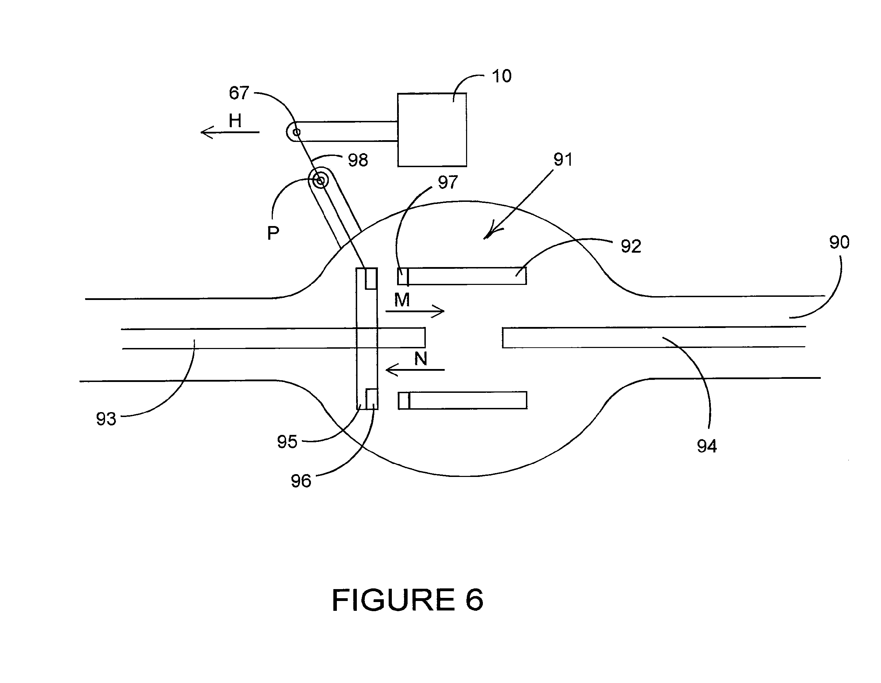

Figure 6 shows the actuator 10 installed on a rear axle 90 (only part of which is shown) of a vehicle.

The rear axle includes a differential 91 having a differential casing 92, a first driven shaft 93 and a second driven shaft 94. A differential lock gear 95 is axially slidable but rotationally fast with shaft 93 and includes an array of teeth 96 for selectively engaging an array of teeth 97 secured rotationally fast to the differential casing 92. To engage the differential lock the differential lock gear 95 is moved in the direction of arrow M so that the gear teeth 96 engage the gear teeth 97 thereby locking the differential casing to the first driven shaft 93. In order to disengage the differential lock the differential lock gear 95 is moved in the direction of arrow N back to the position shown in figure 6 wherein teeth 96 are disengaged from teeth 97. The axle 90, differential 91, differential casing 92, first driven shaft 93, second driven shaft 94, differential lock gear 95, teeth 96 and teeth 97 are all known.

A lever 98 is pivotable about axis P (defined by a lug on the axle housing) via the actuator 10. Anticlockwise rotation of the lever 98 about axis P causes engagement of the differential lock and subsequent clockwise rotation of lever 98 about axis P causes disengagement of the differential lock.

The form locking engagement between teeth 96 and 97 can be contrasted with the clutch plates of the differential lock of GB1130112.

The engaging parts of teeth 96 and 97 can be orientated on a plane passing through the rotational axis of the first driven shaft 93. Alternatively, the teeth 96 and 97 can be "undercut" so that, once engaged, the teeth tend to stay engaged as torque is applied. Undercut gears, and parallel gears have the advantage that, once the teeth are engaged, then they will tend to hold themselves in engagement and the actuator force provided by the motors can be reduced.

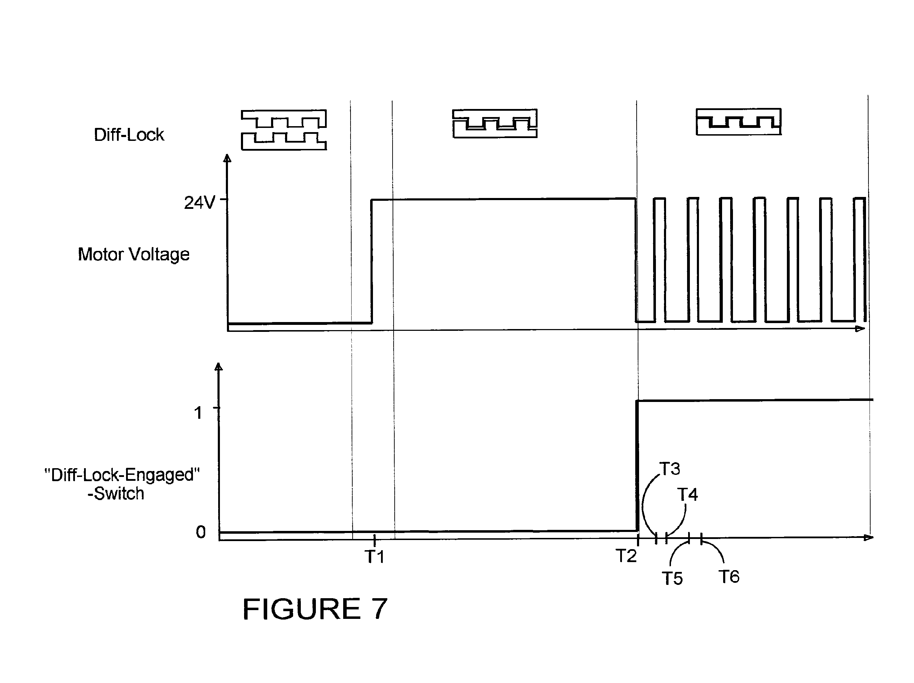

Figure 7 shows the sequence of events occurring when the differential lock is engaged. At time T0 the differential lock is disengaged and hence no power is being fed to the motors. At time T1, the driver requests locking of the differential, typically by operating a switch or the like and power is fed to both motors so as to move the actuator element 50 in the direction of arrow H causing the differential lock gear 95 to move in the direction of arrow M. At time T2 the teeth 96 are engaged with teeth 97 and the flange 70 has engaged switch 81 thereby signalling that the differential lock is engaged. Because the differential teeth 97 and 96 are either parallel or undercut, then the differential lock tends to stay engaged and power to the motor can be cut between time T2 and T3. However because time (T3 - T2) is so short the teeth do not have an opportunity to disengage. Between time T3 and T4 a voltage pulse is applied to the motors to ensure the teeth 96 and 97 remain in engagement. Between time T4 and T5 no voltage is applied to the motors. Between time T5 and T6 a voltage pulse is applied to the motors for a short time to ensure the teeth 96, 97 remain engaged. This pulsing of voltage continues until such time as is required to disengage the differential lock, whereupon all power to the motors is cut and remains cut. The return spring 80 will then disengage the differential lock and return the actuator to its rest position. Note that for explanation purposes, teeth 96 and 97 have been described as being parallel or undercut. None parallel none undercut teeth could equally be used with applying pulsing voltages to the motor, though under such circumstances the pulse of voltage may have to be applied for a longer period and the time period where no voltage is applied may be required to be shorter, depending upon the particular circumstances.

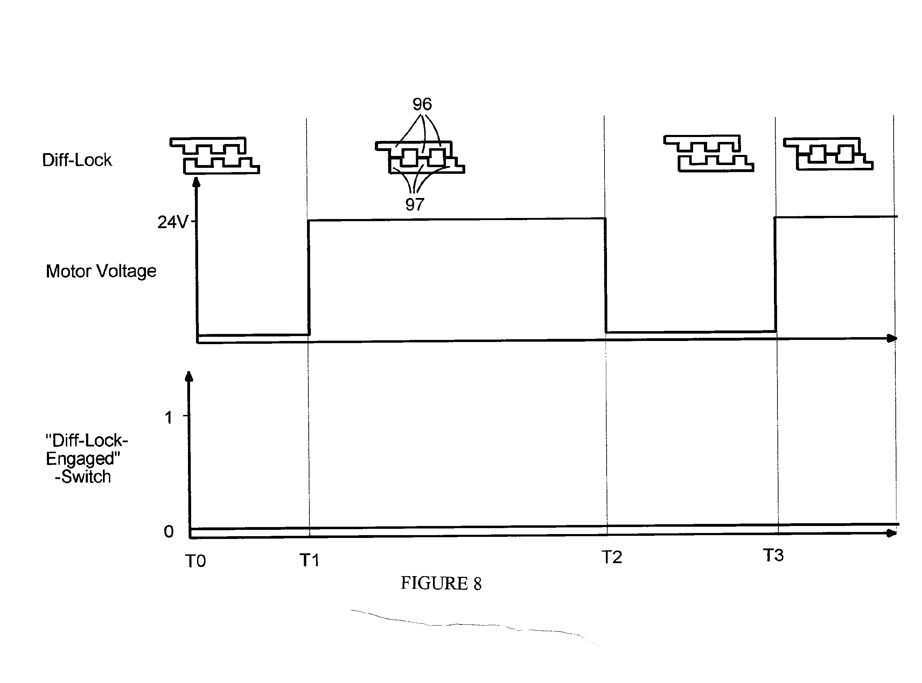

With reference to figure 8 there is shown the sequence of events that occurs when the differential lock is engaged but when the teeth 96 "clash" with teeth 97. Thus, at time T0 no voltage is applied to the motor and the differential lock is disengaged. At time T1 voltage is applied to the motor to engage the differential lock. However, unlike the figure 8 scenario, teeth 96 and 97 do not properly interengage, rather the ends of the teeth clash with each other as shown diagrammatically in figure 8. As will be appreciated, under these circumstances, whilst the bolt 51 has moved to its actuated position as shown in figures 1 to 4, the outer sheath 54 is prevented from moving to its actuated position by virtue of the clashing teeth. Under these circumstances spring 52 is compressed. After a predetermined time (T2 - T1) an ECU recognises a failure to engage the differential lock (since switch 81 has not been operated by flange 70) and power to the motors is cut. After a period of time (T3 - T2) the ECU again applies a voltage to the motors endeavouring to reengage the differential lock. As can be seen in figure 8, a clash of teeth has again occurred after time T3 and hence after the predetermined amount of time the ECU will again cut the power to the motor. The sequence will repeat itself until such time as the differential lock correctly engages, or until such time as it is no longer required to engage the differential lock.

## Claims

1. An actuator for operating a differential lock, the actuator including a chassis, a first motor mounted on the chassis and including a first motor pinion, a second motor mounted on the chassis and including a second motor pinion, a ring gear rotatably mounted on the chassis about a ring gear axis and having a ring gear thread defined about the ring gear axis,
an actuator element having an actuator element thread in engagement with the ring gear thread and having a means for preventing rotation of the actuator element thread,
the first motor pinion and second motor pinion being operable to drive the ring gear.

2. An actuator as defined in claim 1 in which the ring gear has a first axial side and a second axial side and the first motor and second motor are positioned on the first axial side and the actuator element is positioned on the first axial side.

3. An actuator defined in claim 1 or 2 in which the first motor is positioned substantially diametrically opposite to the second motor when considering the ring gear axis.

4. An actuator as defined in any preceding claim in which the ring gear has inwardly facing ring gear teeth.

5. An actuator as defined in any preceding claim in which the first motor pinion engages a first motor intermediate gear set, first motor intermediate gear set engaging the ring gear, and the second motor pinion engages a second motor intermediate gear set, the second motor intermediate gear set engaging the ring gear.

6. An actuator as defined in claim 5 in which the first motor intermediate gear set is positioned substantially diametrically opposite to the second motor intermediate gear set when considering the ring gear axis.

7. An actuator as defined in any preceding claim in which the actuator element has a first part having said actuator element thread, a second part axially moveable relative to the first part and a resilient element to allow said axial movement of the first part relative to the second part.

8. An actuator as defined in claim 7 in which the first part is rotationally fast with the second part.

9. An actuator as defined in claim 8 in which the second part engages the chassis to prevent rotation of the second part relative to the chassis.

10. An actuator as defined in any one of claims 7 to 9 in which the first part is received at least partially within the second part.

11. An actuator as defined in any preceding claim in which a resilient means biases the actuator element to a rest position.

12. An actuator as defined in claim 11 when dependent upon any one of claims 8 to 10 in which the resilient means engages the second part to bias the actuator element to said rest position.

13. An actuator as defined in any preceding claim including a means for detecting when the actuator is in an actuated position.

14. An actuator as defined in any preceding claim including a chassis defining a housing, said housing receiving at least a part of one or more of the first motor, the second motor, the first motor pinion, the second motor pinion, the first motor intermediate gear set, the second motor intermediate gear set, the ring gear, the first part, the second part, the resilient element, the resilient means and the means for detecting when the actuator is in the actuated position.
